# EUROPEAN PATENT APPLICATION

(11) **EP 4 675 818 A1**
(43) Date of publication of application: **07.01.2026**
(21) Application number: 24929408.3
(22) Date of filing: 04.11.2024
(51) Int. Cl.: H01M 50/367, H01M 50/233, H01M 50/204, H01M 50/249

(54) **BATTERY PACK AND VEHICLE INCLUDING SAME**

(30) Priority: 11.04.2024 KR 20240048904
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/017207
(87) International publication number: WO 2025/216380

(57) **Abstract**

Disclosed are a battery pack and a vehicle including the same. The battery pack according to an embodiment of the disclosure may include: a plurality of battery modules in which a plurality of battery cells are stacked; and a pack case configured to store the plurality of battery modules, wherein a discharge path is formed in at least a part of the pack case so as to discharge flame or gas generated from the battery cell.

## Description

### TECHNICAL FIELD

This application is based on and claims priority from Korean Patent Application No. 10-2024-0048904, filed on April 11, 2024, with the Korean Intellectual Property Office, the disclosure of which is incorporated herein in its entirety by reference.

The present disclosure relates to a battery pack and a vehicle including the same, and more specifically, to a battery pack enabling heat to evenly spread and capable of smoothly discharging gas when a thermal event occurs, and a vehicle including the same.

### BACKGROUND ART

In general, secondary batteries refer to batteries capable of being repeatedly charged and discharged, such as lithium-ion batteries, lithium-polymer batteries, nickelcadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery module configured by connecting multiple battery cells in series, parallel, or a combination thereof, and a battery pack configured by connecting the battery modules above in series, parallel, or a combination thereof are widely used.

Although lithium secondary batteries are currently in the spotlight due to their advantages such as high operating voltage and significantly high energy density, since they use organic electrolytes, if the lithium secondary batteries are overcharged, it may cause overcurrent and overheating, leading to explosion or fire in the worst cases.

Various types of secondary batteries may include a battery module having a module case, capable of protecting battery cells, in which a plurality of battery cells are stacked and stored in the module case, and a battery pack including the plurality of battery modules.

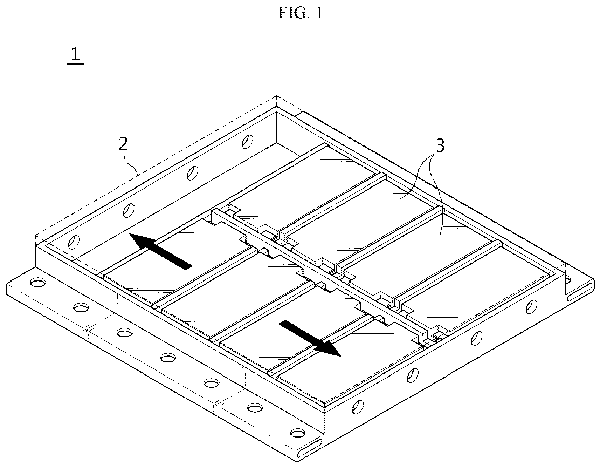

FIG. 1 is a perspective view of a conventional battery pack.

Referring to FIG. 1, if a thermal event occurs in the conventional battery pack 1, flame or gas is blocked by the upper frame 2 of the battery pack 1 and is unable to be easily discharged upward, but moves to the left or right (see the arrows in FIG. 1), thereby increasing the internal pressure, so the battery module 3 or the battery pack 1 is more likely to explode.

In this case, if an explosion occurs in the battery module 2 where the flame occurred, the flame may spread to another battery module 2, thereby causing thermal runaway. If the flame leaks to the outside due to this thermal runaway, the driver of the electric vehicle may be burned or exposed to danger.

Alternatively, a chain reaction of flames due to flame propagation may damage or burn down the battery module 2 or battery pack 1, making it difficult to secure the stability of the battery module 2 or battery pack 1.

### DISCLOSURE

### Technical Problem

The present disclosure is designed to solve the problems of the related art, and therefore the present disclosure is directed to providing a battery pack enabling flame and heat caused by the flame to evenly spread inside the battery pack when the flame occurs in a single battery cell, thereby preventing thermal concentration or heat energy trapping and attaining uniform thermal distribution, and a vehicle including the same.

In addition, the present disclosure is to provide a battery pack facilitating venting, so that gas is easily discharged, and a vehicle including the same.

In addition, the present disclosure is to provide a battery module capable of preventing thermal runaway by preventing a chain reaction of flames due to flame propagation, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery modules in which a plurality of battery cells are stacked; and a pack case configured to store the plurality of battery modules, wherein a discharge path may be formed in at least a part of the pack case so as to discharge flame or gas generated from the battery cell.

In an embodiment, the pack case may include an upper frame, and the discharge path may be formed in the upper frame.

In an embodiment, the upper frame may have a hollow space formed therein so that flame or gas moves therethrough.

In an embodiment, the upper frame may have a connection hole formed therein, and the battery module may be connected to the connection hole.

In an embodiment, the battery module may include an upper module case, and a discharge hole through which flame or gas is discharged may be formed in the upper module case, and the discharge hole may be connected to the discharge path of the pack case.

In an embodiment, the battery pack may further include a connection part configured to connect the discharge hole and the discharge path.

In an embodiment, the connection part may be configured as a gasket or sealing member to prevent flame or gas from leaking.

In an embodiment, the battery pack may further include a backflow prevention member installed in the upper frame to prevent backflow of flame or gas.

In an embodiment, the backflow prevention member may be configured to rotate by flame or gas.

In an embodiment, the backflow prevention member may include: a rotation axis coupled to an upper side of the upper frame; and a first opening/closing portion rotatably coupled to the rotation axis and coming into contact with a lower side of the upper frame.

In an embodiment, the backflow prevention member may include: a protrusion protruding from the upper frame; an elastic portion coupled to the protrusion; and a second opening/closing portion coupled to the elastic portion.

In an embodiment, the protrusion may include: a first protrusion protruding from an upper side of the upper frame; a second protrusion protruding from a lower side of the upper frame at a position corresponding to a position of the first protrusion and spaced a predetermined distance apart from the first protrusion.

In an embodiment, the elastic portion may include: a first elastic portion coupled to the first protrusion; and a second elastic portion coupled to the second protrusion.

In an embodiment, the battery pack may further include a path extension member installed in the upper frame to extend a discharge path of flame or gas.

In an embodiment, the path extension member may include: at least one first protruding portion protruding from a first portion of the upper frame; and at least one second protruding portion protruding from a second portion of the upper frame, and the first protruding portion and the second protruding portion may be arranged in a zigzag pattern with respect to each other.

In an embodiment, the path extension member may include: at least one first protruding portion protruding from a first portion of the upper frame; and at least one second protruding portion protruding from a second portion of the upper frame, and the first protruding portion may be disposed to be inclined toward the second portion, and the second protruding portion may be disposed to be inclined toward the first portion.

In another aspect of the disclosure, there is provided a vehicle including at least one battery pack described above.

### Advantageous Effects

The embodiments of the present disclosure have the effect of preventing thermal concentration or heat energy trapping and attaining uniform thermal distribution when flame occurs in a single battery cell by enabling the flame and heat caused by the flame to evenly spread inside the battery pack.

In addition, the embodiments of the present disclosure have the effect of facilitating venting, so that gas is able to be easily discharged.

In addition, the embodiments of the present disclosure have the effect of preventing thermal runaway by preventing a chain reaction of flames due to flame propagation.

However, the effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a perspective view of a conventional battery pack.
FIG. 2 is a perspective view of a battery pack according to a first embodiment of the present disclosure.
FIG. 3 is an exploded perspective view of a battery pack according to a first embodiment of the present disclosure.
FIG. 4 is a cross-sectional view taken along line A-A' in FIG. 2.
FIG. 5 is an enlarged view of part B in FIG. 3.
FIG. 6 is a drawing illustrating a connection part connected to the battery module in FIG. 5.
FIG. 7 is a cross-sectional view of a battery pack according to a second embodiment of the present disclosure.
FIG. 8 is a cross-sectional view of a battery pack according to a third embodiment of the present disclosure.
FIG. 9 is a partial plan view of a battery pack according to a fourth embodiment of the present disclosure.
FIG. 10 is a partial plan view of a battery pack according to a fifth embodiment of the present disclosure.
FIG. 11 is a drawing illustrating a vehicle including a battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the attached drawings, the sizes of elements or specific portions constituting the elements may be exaggerated, omitted, or schematically illustrated for convenience of explanation and clarification of the disclosure. Accordingly, the sizes of the respective elements do not reflect their actual sizes. Descriptions of related known functions or configurations, which may obscure the subject matter of the present disclosure, will be omitted.

In this specification, the expression "an element is 'connected' or 'coupled' to another element" should be understood that the elements may be directly connected or coupled to each other and that the two elements may be indirectly connected or coupled to each other through a connection member therebetween.

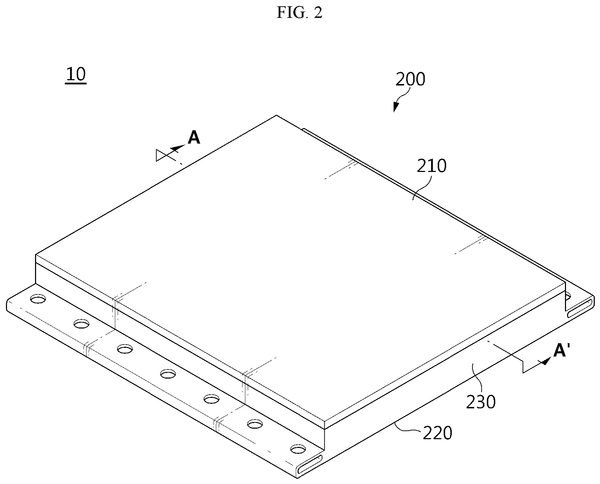

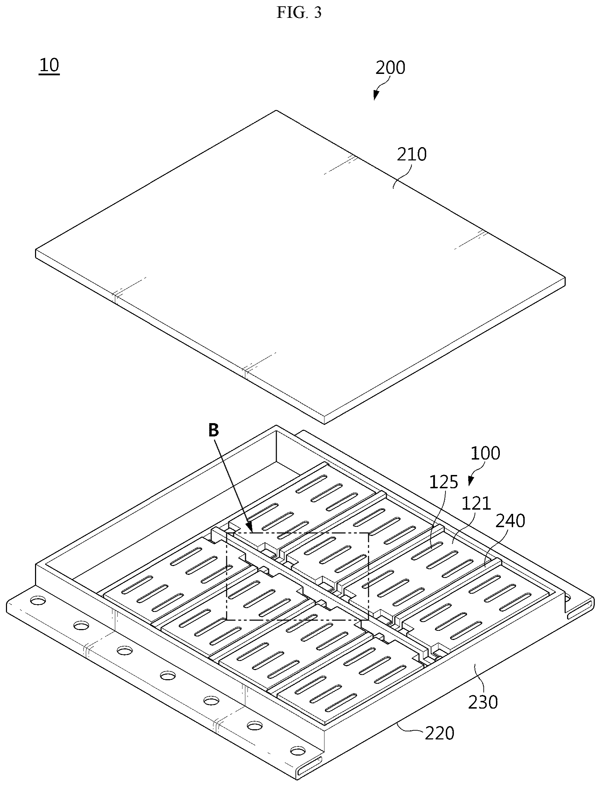

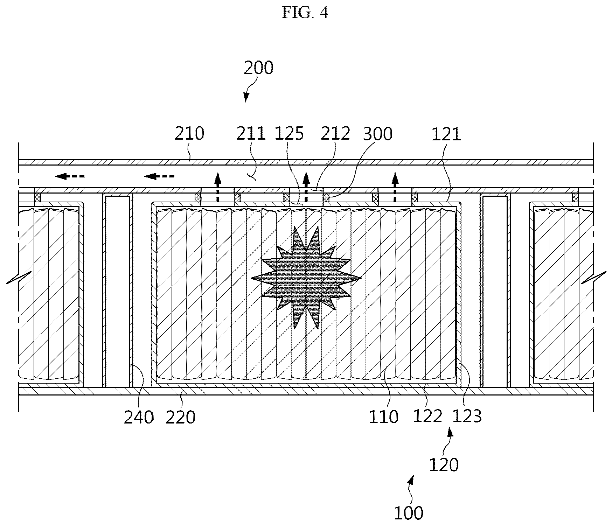

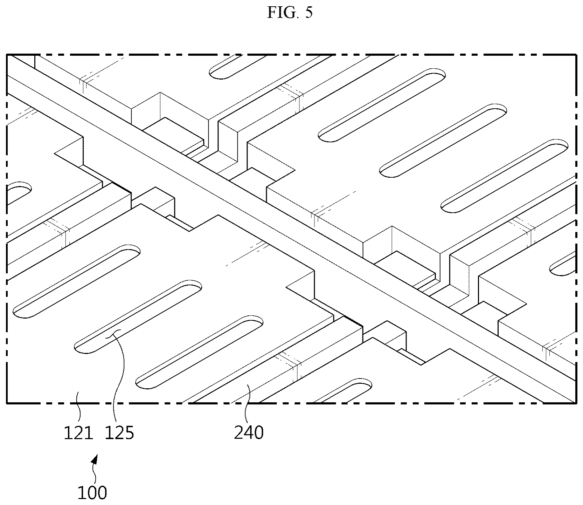

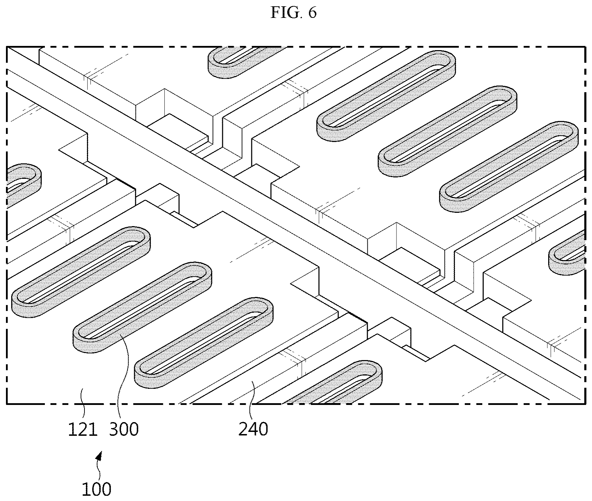

FIG. 2 is a perspective view of a battery pack according to a first embodiment of the present disclosure, FIG. 3 is an exploded perspective view of a battery pack according to a first embodiment of the present disclosure, FIG. 4 is a cross-sectional view taken along line A-A' in FIG. 2, FIG. 5 is an enlarged view of part B in FIG. 3, and FIG. 6 is a drawing illustrating a connection part connected to the battery module in FIG. 5.

Referring to FIGS. 2 to 4, a battery pack 10 according to a first embodiment of the present disclosure may be configured to include a plurality of battery modules 100 and a pack case 200.

The plurality of battery modules 100 may be arranged in various ways. For example, they may be arranged in horizontal and vertical directions as shown in FIG. 3, but are not limited thereto.

Referring to FIG. 4, the battery module 100 may be provided with a plurality of battery cells 110 and a module case 120.

The plurality of battery cells 110 may be stacked on each other. The battery cells 110 may have various structures, and the plurality of battery cells 110 may be stacked in various ways.

The battery cell 110 may have a structure in which a plurality of unit cells, configured as positive electrode plate-separator-negative electrode plate sequentially laminated, or a plurality of bi-cells, configured as positive electrode plate-separator-negative electrode plate-separator-positive electrode plate-separator-negative electrode plate sequentially laminated, are stacked depending on the battery capacity.

The battery cell 110 may be provided with an electrode lead. The electrode lead is a kind of terminal exposed to the outside and connected to an external device, and may be made of a conductive material. The electrode lead may include a positive electrode lead and a negative electrode lead.

The positive electrode lead and the negative electrode lead may be disposed in opposite directions along the longitudinal direction of the battery cell 110, or the positive electrode lead and the negative electrode lead may be positioned in the same direction along the longitudinal direction of the battery cell 110.

The battery cell 110 may have a plurality of cartridges (not shown) that receive the battery cell 110. Each cartridge (not shown) may be manufactured by plastic-injection molding, and a plurality of cartridges (not shown) having a storage portion capable of storing the battery cell 110 may be stacked. A cartridge assembly configured as a plurality of cartridges (not shown) stacked may be provided with connector elements or terminal elements.

The connector elements may include various types of electrical connection parts or connection members to be connected to, for example, a BMS (Battery Management System) (not shown) capable of providing data about the voltage or temperature of the battery cell 110.

In addition, the terminal elements include a positive electrode terminal and a negative electrode terminal as main terminals connected to the battery cell 110. The terminal element may have a terminal bolt to be electrically connected to the outside. Meanwhile, the battery cell 110 may have various shapes.

Referring to FIG. 4, a plurality of battery cells 110 are stacked and stored in the module case 120. The module case 120 surrounds the plurality of battery cells 110, thereby protecting the battery cells 110 from external vibrations or impacts.

The module case 120 may be formed in a shape corresponding to the shape of a stack configured as the plurality of battery cells 110 stacked. For example, if the stack configured as the plurality of battery cells 110 stacked is formed in the shape of a hexahedron, the module case 120 may also be formed in the shape of a hexahedron corresponding thereto, but is not limited thereto. Here, the module case 120 may include an upper module case 121, a lower module case 122, and a side module case 123.

In addition, the module case 120 may be manufactured by, for example, bending a metal plate, so that the module case 120 may be configured in an integral form. If the module case 120 is manufactured in an integral form, the coupling process may be easy and simplified. Alternatively, the module case 120 may be provided as separate parts and then coupled to each other by welding or the like. However, the material of the module case 120 is not limited to a metal material.

Referring to FIGS. 3 and 4, a plurality of battery modules 100 are stored in the pack case 200. The pack case 200 may be configured to include, for example, an upper frame 210, a lower frame 220, a side frame 230, and a partition frame 240. In addition, a discharge path 211 is formed in at least a part of the pack case 200 so as to discharge flame or gas generated from the battery cell 110.

The upper frame 210 is coupled to the side frame 230. In addition, the discharge path 211 may be formed in the upper frame 210. For example, referring to FIG. 4, the upper frame 210 may have a hollow space formed therein, and the hollow space of the upper frame 210 may serve as the discharge path 211. In addition, the upper frame 210 may be configured such that the flame or gas generated from the battery cell 110 moves through the hollow space therein.

Here, the flame or gas may move only in one direction of the upper frame 210, or may move in both directions of the upper frame 210.

Referring to FIG. 4, a connection hole 212 may be formed in the upper frame 210, and the battery module 100 may be connected to the connection hole 212, so that flame or gas generated from a battery cell 110 may move to the hollow space inside the upper frame 210 through the connection hole 212.

Specifically, the module case 120 of the battery module 100 may include the upper module case 121 as described above, and referring to FIG. 5, a discharge hole 125 through which flame or gas is discharged may be formed on the upper module case 121. In addition, the discharge hole 125 may be connected to the discharge path 211 of the pack case 200 in various ways.

For example, referring to FIG. 4, FIG. 5, and FIG. 6, the discharge hole 125 formed in the upper module case 121 and the connection hole 212 formed in the upper frame 210 may communicate with each other, and may be connected through a connection part 300.

That is, the connection part 300 connects the discharge hole 125 and the discharge path 211 by connecting the discharge hole 125 and the connection hole 212, thereby allowing the flame or gas to move to the discharge path 211 through the connection part 300.

The connection part 300 may be configured in various ways, and for example, may be configured as a gasket or sealing member that prevents the flame or gas from leaking out. That is, in this case, the connection part 300 has a function of connecting the discharge hole 125 and the connection hole 212, as well as a sealing function of preventing the flame or gas from leaking out.

However, the connection part 300 is not limited thereto, and may be made of various materials so as to form a connection path through which flame or gas may move.

Referring to FIG. 4, flame or gas generated from the battery cell 110 inside the battery module 100 is discharged to the outside of the module case 120 through the discharge hole 125 and moves to the discharge path 211 inside the upper frame 210 of the pack case 200 through the connection part 300 connecting the discharge hole 125 and the connection hole 212.

In addition, as described above, since the hollow discharge path 211 may be formed inside the upper frame 210, the flame or gas entering the upper frame 210 through the connection part 300 and the connection hole 212 may move along the discharge path 211 inside the upper frame 210 and then be discharged.

As described above, when flame occurs in any one battery cell 110, the flame inside the battery pack 10 and the heat caused by the flame may evenly spread along the discharge path 211 inside the upper frame 210, thereby preventing thermal concentration or heat energy trapping and attaining uniform thermal distribution.

In addition, the venting through the discharge path 211 of the upper frame 210 may be facilitated, so that the gas may be easily discharged.

In addition, it is possible to prevent thermal runaway by preventing a chain reaction of flames due to flame propagation.

Referring to FIG. 3, the lower frame 220 is configured so that a plurality of battery modules 100 are seated thereon. The lower frame 220 may be formed in the shape of a square plate, but is not limited thereto. The lower frame 220 forms the bottom of the pack case 200.

The side frame 230 may be configured to extend upward from the edge of the lower frame 220. The side frame 230 defines the height of the pack case 200 and forms a preset space between the same and the lower frame 220.

In addition, a plurality of battery modules 100 are provided in the space between the side frame 230 and the lower frame 220. The side frame 230 may include a long side frame having a longer length and a short side frame having a shorter length. Alternatively, the lengths of the side frames 230 may be the same.

The partition frame 240 extends upward inside the lower frame 220 and is coupled to the side frame 230. One or more partition frames 240 may be provided, and the battery module 100 may be disposed between a plurality of partition frames 240 or between the partition frame 240 and the side frame 230. Here, the partition frames 240 may be arranged in the horizontal or vertical direction inside the side frame 230.

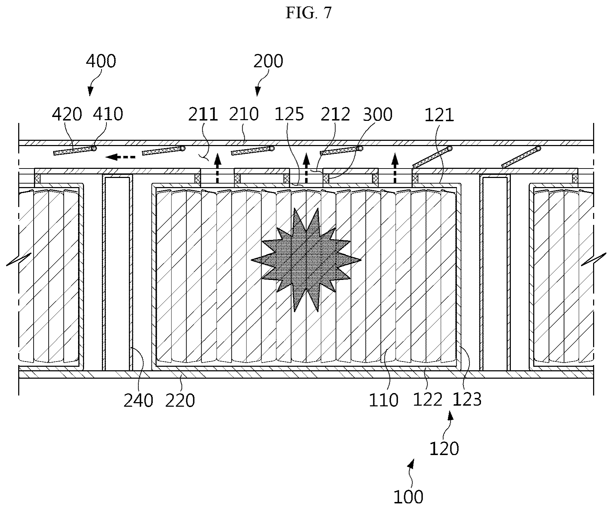

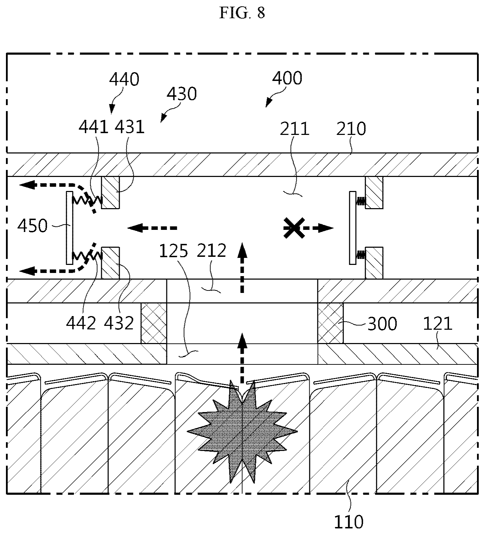

FIG. 7 is a cross-sectional view of a battery pack according to a second embodiment of the present disclosure, and FIG. 8 is a cross-sectional view of a battery pack according to a third embodiment of the present disclosure.

The second and third embodiments of the present disclosure are different in configuration from the first embodiment in that they are provided with a backflow prevention member 400. However, some descriptions of the first embodiment, which are common with the second or third embodiment, will also be applied to the second or third embodiment. In addition, some descriptions of the second or third embodiment, which are applicable to the first embodiment, may be applied to the first embodiment.

The backflow prevention member 400 is installed inside the upper frame 210 to prevent the backflow of flame or gas. Here, the backflow prevention member 400 may be configured in various ways and, for example, may be configured to rotate by flame or gas. However, it is not limited thereto.

Referring to FIG. 7, the backflow prevention member 400 may include a rotation axis 410 and a first opening/closing portion 420. The rotation axis 410 may be coupled to the upper inner side of the upper frame 210. In addition, the first opening/closing portion 420 is rotatably coupled to the rotation axis 410 and comes into contact with the lower side of the upper frame 210. The first opening/closing portion 420 may be configured to come into contact with the lower side of the upper frame 210 on the left side of the rotation axis 410 as shown in FIG. 7, but is not limited thereto, and the contact position may vary depending on the movement direction of the gas.

Referring to FIG. 7, if the gas moves from the right to the left (see the arrow) in FIG. 7, the first opening/closing portion 420 rotates around the rotation axis 410 to be opened. Then, the gas may move from the right to the left and then be discharged. However, after the gas passes through the first opening/closing portion 420, the first opening/closing portion 420 may rotate by gravity to be closed, thereby preventing the gas from moving in the reverse direction.

Referring to FIG. 8, the backflow prevention member 400 may include a protrusion 430, an elastic portion 440, and a second opening/closing portion 450.

The protrusion 430 protrudes from the upper frame 210. For example, the protrusion 430 may include a first protrusion 431 and a second protrusion 432, wherein the first protrusion 431 protrudes from the upper side of the upper frame 210, and wherein the second protrusion 432 protrudes from the lower side of the upper frame 210. Here, the second protrusion 432 may be provided at a position corresponding to the position of the first protrusion 431 so as to be spaced a predetermined distance apart from the first protrusion 431.

In addition, the elastic portion 440 is coupled to the protrusion 430. The elastic portion 440 may include a first elastic portion 441 and a second elastic portion 442, and the first elastic portion 441 may be coupled to the first protrusion 431, and the second elastic portion 442 may be coupled to the second protrusion 432.

In addition, the second opening/closing portion 450 is coupled to the elastic portion 440, that is, to the first elastic portion 441 and the second elastic portion 442, respectively, as shown in FIG. 8.

In this structure, if the gas moves from the right to the left (see the arrow) in FIG. 8, the second opening/closing portion 450 is opened. In addition, the gas may move from the right to the left along the direction of the arrow in FIG. 8 and then be discharged. However, after the gas passes through the second opening/closing portion 450, the second opening/closing portion 450 may be closed by the elastic force of the elastic portion 440, thereby preventing the gas from moving in the reverse direction.

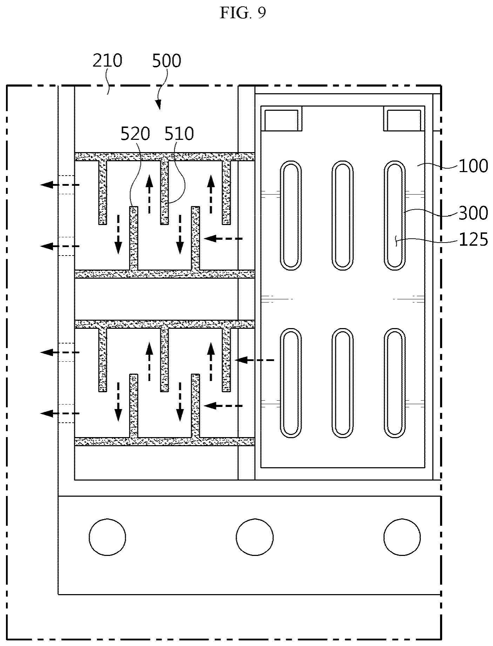

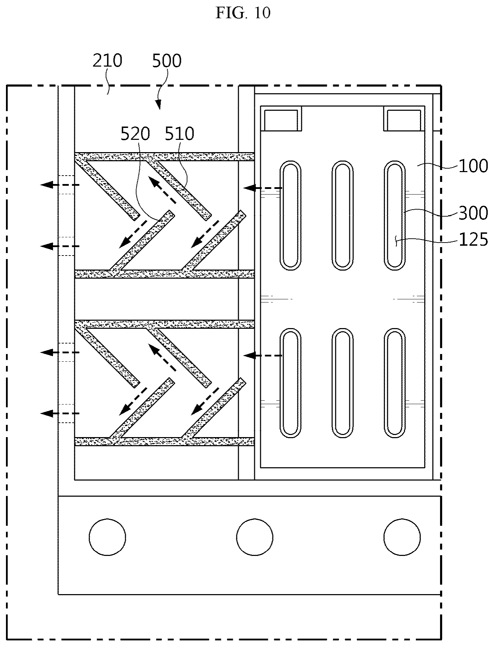

FIG. 9 is a partial plan view of a battery pack according to a fourth embodiment of the present disclosure, and FIG. 10 is a partial plan view of a battery pack according to a fifth embodiment of the present disclosure.

The fourth and fifth embodiments of the present disclosure are different in configuration from other embodiments in that a path extension member 500 is provided. However, some descriptions of other embodiments, which are common with the fourth or fifth embodiment, will also be applied to the fourth or fifth embodiment. In addition, some descriptions of the fourth or fifth embodiment, which are applicable to other embodiments, may be applied to other embodiments.

The path extension member 500 is installed in the hollow space inside the upper frame 210 to extend the discharge path of the flame or gas. That is, the path extension member 500 lengthens the movement path of the flame or gas so that the temperature of the flame or high-temperature gas (or high-temperature sparks) may be lowered or the flame or gas may be extinguished while moving therethrough.

Referring to FIG. 9, the path extension member 500 may include at least one first protruding portion 510 and at least one second protruding portion 520. Here, at least one first protruding portion 510 protrudes from a first portion of the upper frame 210. In addition, at least one second protruding portion 520 protrudes from a second portion of the upper frame 210.

Here, the first protruding portion 510 and the second protruding portion 520 may be arranged in a zigzag pattern with respect to each other, thereby bring about an effect of lowering the temperature of the flame or gas while it moves in a zigzag pattern between the first protruding portion 510 and the second protruding portion 520 (see the arrows in FIG. 9).

Referring to FIG. 10, the path extension member 500 may include at least one first protruding portion 510 and at least one second protruding portion 520. Here, at least one first protruding portion 510 protrudes from a first portion of the upper frame 210. In addition, at least one second protruding portion 520 protrudes from a second portion of the upper frame 210.

Here, the first protruding portion 510 is disposed to be inclined toward the second portion, and the second protruding portion 520 is disposed to be inclined toward the first portion. Accordingly, there is an effect of lowering the temperature of the flame or gas while it moves along the inclined path between the first protruding portion 510 and the second protruding portion 520 (see the arrows in FIG. 10).

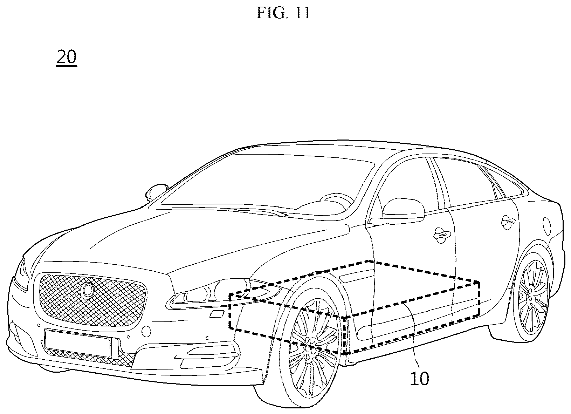

FIG. 11 is a drawing illustrating a vehicle including a battery pack according to respective embodiments of the present disclosure.

Referring to FIG. 11, a vehicle 20 according to an embodiment of the present disclosure may include one or more battery packs 10 according to the respective embodiments described above. Here, the vehicle 20 includes various vehicles configured to use electricity, such as an electric vehicle or a hybrid vehicle.

Although terms indicating directions such as up, down, left, and right are used in this specification, it is obvious to those skilled in the art to which the present disclosure pertains that these terms are only for convenience of explanation with reference the relevant drawings and may vary depending on the position, arrangement, or rotation of the target object or the position of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. That is, the true scope of the technical idea of the present disclosure is shown in the claims, and all differences within the scope equivalent thereto should be construed as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery modules in which a plurality of battery cells are stacked; and
a pack case configured to store the plurality of battery modules,
wherein a discharge path is formed in at least a part of the pack case so as to discharge flame or gas generated from the battery cell.

2. The battery pack according to claim 1,
wherein the pack case comprises an upper frame, and
wherein the discharge path is formed in the upper frame.

3. The battery pack according to claim 2,
wherein the upper frame has a hollow space formed therein so that flame or gas moves therethrough.

4. The battery pack according to claim 3,
wherein the upper frame has a connection hole formed therein, and
wherein the battery module is connected to the connection hole.

5. The battery pack according to claim 1,
wherein the battery module comprises an upper module case,
wherein a discharge hole through which flame or gas is discharged is formed in the upper module case, and
wherein the discharge hole is connected to the discharge path of the pack case.

6. The battery pack according to claim 5,
further comprising a connection part configured to connect the discharge hole and the discharge path.

7. The battery pack according to claim 6,
wherein the connection part is configured as a gasket or sealing member to prevent flame or gas from leaking.

8. The battery pack according to claim 2,
further comprising a backflow prevention member installed in the upper frame to prevent backflow of flame or gas.

9. The battery pack according to claim 8,
wherein the backflow prevention member is configured to rotate by flame or gas.

10. The battery pack according to claim 9,
wherein the backflow prevention member comprises:
a rotation axis coupled to an upper side of the upper frame; and
a first opening/closing portion rotatably coupled to the rotation axis and coming into contact with a lower side of the upper frame.

11. The battery pack according to claim 8,
wherein the backflow prevention member comprises:
a protrusion protruding from the upper frame;
an elastic portion coupled to the protrusion; and
a second opening/closing portion coupled to the elastic portion.

12. The battery pack according to claim 11,
wherein the protrusion comprises:
a first protrusion protruding from an upper side of the upper frame;
a second protrusion protruding from a lower side of the upper frame at a position corresponding to a position of the first protrusion and spaced a predetermined distance apart from the first protrusion.

13. The battery pack according to claim 12,
wherein the elastic portion comprises:
a first elastic portion coupled to the first protrusion; and
a second elastic portion coupled to the second protrusion.

14. The battery pack according to claim 2,
further comprising a path extension member installed in the upper frame to extend a discharge path of flame or gas.

15. The battery pack according to claim 14,
wherein the path extension member comprises:
at least one first protruding portion protruding from a first portion of the upper frame; and
at least one second protruding portion protruding from a second portion of the upper frame, and
wherein the first protruding portion and the second protruding portion are arranged in a zigzag pattern with respect to each other.

16. The battery pack according to claim 14,
wherein the path extension member comprises:
at least one first protruding portion protruding from a first portion of the upper frame; and
at least one second protruding portion protruding from a second portion of the upper frame,
wherein the first protruding portion is disposed to be inclined toward the second portion, and
wherein the second protruding portion is disposed to be inclined toward the first portion.

17. A vehicle comprising at least one battery pack according to any one of claims 1 to 16.
